# EUROPÄISCHE PATENTSCHRIFT

(11) **EP 2 193 272 B1**
(45) Veröffentlichungstag und Bekanntmachung des Hinweises auf die Patenterteilung: **28.03.2018**
(21) Anmeldenummer: 08832724.2
(22) Anmeldetag: 12.09.2008
(51) Int. Cl.: F03H 1/00, B64G 1/40, B64G 1/54

(54) **IONENBESCHLEUNIGERANORDNUNG MIT EINER VORRICHTUNG ZUR VERMINDERUNG DER BEAUFSCHLAGUNG EINES FLÄCHENABSCHNITTS DURCH POSITIV GELADENE IONEN**
ION ACCELERATOR ARRANGEMENT COMPRISING A DEVICE FOR REDUCING THE IMPACT OF POSITIVELY CHARGED IONS ON A SURFACE SECTION
DISPOSITIF ACCÉLÉRATEUR D'IONS COMPRENANT UN DISPOSITIF POUR RÉDUIRE L'EFFET D'IONS CHARGÉS POSITIVEMENT SUR UNE SECTION DE SURFACE

(30) Priorität: 14.09.2007 DE 102007043955
(43) Veröffentlichungstag der Anmeldung: 09.06.2010
(73) Patentinhaber: Thales Electronic Systems GmbH, 89077 Ulm (DE)
(72) Erfinder: HARMANN, Hans-Peter, 89077 Ulm (DE); KOCH, Norbert, 89073 Ulm (DE); KORNFELD, Günter, 89275 Elchingen (DE)
(74) Vertreter: Baur & Weber Patentanwälte PartG mbB
(86) Internationale Anmeldenummer: PCT/EP2008/062152
(87) Internationale Veröffentlichungsnummer: WO 2009/037197

(56) Entgegenhaltungen:
- DE-T2- 69 734 062
- DE-T2- 69 919 675
- JP-A- 4 218 498
- JP-A- 2005 317 698
- US-A1- 2006 169 931
- US-B1- 6 260 808

## Beschreibung

Die Erfindung betrifft eine lonenbeschleunigeranordnung, welche als Antriebsanordnung in einem Raumflugkörper geeignet ist.

Für Antriebsanordnungen in Raumflugkörpern wie insbesondere Satelliten oder Raumsonden sind neben chemischen Antrieben und gepulsten thermischen Antrieben auch elektrostatische Antriebe bekannt. Letztere benutzen insbesondere eine Hochspannung, um positiv geladene Ionen eines in einer Ionisationskammer ionisierten Arbeitsgases in dem statischen Hochspannungsfeld zu beschleunigen und als Plasmastrahl durch eine Öffnung der Ionisationskammer auszustoßen. Nach dem Rückstoßprinzip wird dabei der Raumflugkörper in die entgegen gesetzte Richtung beschleunigt. Als Arbeitsgas dient vorzugsweise ein Edelgas, wie insbesondere Xenon. Solche elektrostatischen Antriebe sind wegen ihres hohen spezifischen Impulses besonders vorteilhaft.

In der DE 69734062 T2 ist ein Plasmatriebwerk nach Art eines sogenannten Hall-Thrusters beschrieben, bei welchen am äußeren Umfang des Ausgangs der ringförmigen Ionisationskammer zusätzlich zu dem üblichen, ringförmigen äußeren Polschuh ein gegen diesen in Strahlrichtung versetzter zusätzlicher magnetischer Polschuh vorgesehen ist. Der zusätzliche Polschuh, welcher vorzugsweise aus Weicheisen besteht, dient zur Strahlformung des ausgestoßenen Plasmastrahls.

Beim Betrieb derartiger Anordnungen zeigt sich, dass die die Strahlaustrittsöffnung umgebende, in Richtung des ausgestoßenen Plasmastrahls weisende Oberfläche der lonenbeschleunigeranordnung oder des Raumflugkörpers erodiert wird. Solche Schäden, welche durch Ionen aus dem ausgestoßenen Plasmastrahl die auf die die Ausgangsöffnung umgebende Fläche umgelenkt werden, bei Raumflugkörpern ohne Reparaturmöglichkeit besonders gravierend sein können.

Schutzmaßnahmen gegen durch externe kosmische Strahlung in Form von hochenergetischen Elektronen und/oder Ionen verursachte Schäden oder Störungen in Raumflugkörpern sind als den gesamten Raumflugkörper umgebende magnetische Dipolfelder z. B. aus der US 2006/0169931 A1, der JP 2005-317698 A oder der JP 04-218498A bekannt. In der US 6260808 B1 ist das Problem behandelt, dass bei Auftreten erhöhter Plasmakonzentrationen in der einen Satelliten umgebenden kosmischen Strahlung hohe Spannungen zwischen einer Solarzellenanordnung und andern Teilen des Satelliten auftreten können, welche die Effizienz der Solarzellenanordnung beeinträchtigt. Zur Lösung wird vorgeschlagen, neben der Solarzellenanordnung zusätzliche Flächen anzuordnen und diese mit an der Rückseite der Solarzellenanordnung liegenden Flächen leitend zu verbinden.

Der Erfindung liegt die Aufgabe zugrunde, Erosion eines die Austrittsöffnung einer als Antriebseinrichtung eines Raumflugkörpers geeigneten Ionenbeschleunigeranordnung umgebenden Oberflächenbereichs zu vermindern.

Die erfindungsgemäße Lösung ist in dem unabhängigen Anspruch beschrieben. Die abhängigen Ansprüche enthalten vorteilhafte Ausgestaltungen und Weiterbildungen der Erfindung.

Durch das Magnetfeld mit überwiegend zu dem Flächenabschnitt paralleler Magnetfeldrichtung in einem in Richtung der Flächennormalen des Flächenabschnitts vor diesem liegenden Raumbereich wird überraschend eine erhebliche Verminderung der lonenbeaufschlagung des Flächenabschnitts erreicht, obgleich die Wirkung des Magnetfelds auf die positiv geladenen Ionen nur gering ist. Die Wirkung des Magnetfelds beruht vielmehr darauf, dass eine durch eine anfängliche Beaufschlagung des Flächenabschnitts mit Ionen erfolgende positive Aufladung des Flächenabschnitts zu einem weitere Ionen abstoßenden elektrischen Feld führt, und dass Elektronen, welche durch ein solches Feld in Richtung des Flächenabschnitts beschleunigt werden, aufgrund ihrer geringen Masse und hohen Geschwindigkeit in dem Magnetfeld umgelenkt und von dem Flächenabschnitt abgehalten werden. Hierdurch bleibt die positive Aufladung des Flächenabschnitts und das daraus resultierende für Ionen abstoßende elektrische Feld erhalten.

Der Flächenabschnitt weist vorzugsweise eine elektrisch nichtleitende Oberfläche auf oder ist hochohmig von leitenden Flächen einer den Flächenabschnitt enthaltenden Gesamteinrichtung, beispielsweise eines Raumflugkörpers getrennt. Der Flächenabschnitt kann vorteilhafterweise Teil einer elektrischen Einrichtung, insbesondere einer Solarzellenanordnung eines Raumflugkörpers sein. Das Magnetfeld weist vorteilhafterweise wenigstens eine Cusp-Struktur auf, welche durch einen hohen Feldgradienten reflektierend auf Elektronen wirkt, welche sich in gewendelten Bahnen entlang der Magnetfeldlinien bewegen.

Bei einer Ionenbeschleunigeranordnung zeigt sich überraschend, dass durch eine die Strahlaustrittsöffnung umgebende, dem ausgestoßenen Plasmastrahl zuweisende Oberfläche, die nachfolgend und in den Ansprüchen als Abschirmfläche bezeichnet ist, welche im Betrieb der Ionenbeschleunigeranordnung räumlich zwischen dem ausgestoßenen Plasmastrahl, insbesondere dem sogenannten Plume-Bereich und auf Massepotential liegenden Teilen, insbesondere eines Raumflugkörpers und elektrisch auf einem vom Massepotential des Raumflugkörpers getrennten Potential liegt, eine starke Verringerung der Flächenerosion erreicht wird.

Insbesondere von Vorteil ist eine Ausführung, bei welcher die Abschirmfläche im Betrieb der Ionenbeschleunigeranordnung, d. h. während des Ausstoßes des Plasmastrahls aus der Strahlaustrittsöffnung auf gegenüber dem Massepotential des Raumflugkörpers gleitendem Potential liegt. Dies kann insbesondere durch eine elektrisch nicht leitende Ausführung der Abschirmfläche und/oder durch elektrische Isolation der Abschirmfläche gegen das Massepotential des Raumflugkörpers erfolgen. Im Antriebsbetrieb stellt sich dann automatisch ein von dem Massepotential getrenntes Potential auf der Abschirmfläche ein.

Die Erfindung macht sich die Erkenntnis zunutze, dass die beobachtete Erosion maßgeblich darauf zurückzuführen ist, dass im ausgestoßenen Plasmastrahl in Strahlrichtung außerhalb der Ionisationskammer das sogenannte Plume-Potential für positiv geladene Ionen höher liegt als das Massepotential des Raumflugkörpers und daher im Plumebereich erzeugte bzw. vorliegende Ionen aus dem Plasmastrahl umgelenkt und in Richtung des Massepotentials des Raumflugkörpers beschleunigt werden und dabei bevorzugt in dem Bereich der Abschirmfläche um die Strahlaustrittsöffnung umgebenden Fläche aufschlagen. Das Plume-Potential selbst ist nicht gezielt veränderlich. Die Gasdichte nimmt mit zunehmendem Abstand vom Zentrum des Plume-Bereichs schnell ab. Eine typische Ausdehnung des Plume-Bereichs in Strahlrichtung nach der Strahlaustrittsöffnung der Ionisationskammer liegt in der Größenordnung von 10 cm - 40 cm.

Durch die Potentialtrennung der Abschirmfläche von dem Massepotential stellt sich insbesondere durch ein gleitendes Potential im Antriebsbetrieb schnell ein Potential auf der Abschirmfläche ein, welches zwischen dem Plume-Potential liegt und dem tieferen Massepotential liegt und das Massepotential für die Ionen des ausgestoßenen Plasmastrahls abschirmt.

In anderer Ausführung kann die Abschirmfläche elektrisch leitend sein und auf ein um eine definierte Spannung gegen das Massepotential versetztes Abschirmpotential gelegt sein.

In besonders vorteilhafter Ausführung kann das zu dem Oberflächenbereich überwiegend parallele Magnetfeld in eine Cusp-Struktur bei der Strahlaustrittsöffnung übergehen, wobei an der Cusp-Struktur die Feldrichtung überwiegend senkrecht zur Strahlrichtung des Plasmastrahls verläuft und ein höherer Feldgradient als über dem genannten Oberflächenbereich vorliegt. Die Cusp-Struktur umgibt die Strahlachse ringförmig und liegt radial innerhalb der seitlichen Begrenzung der Kammerwand. Die Cusp-Struktur kann insbesondere auf einen weichmagnetischen Polschuh einer Magnetanordnung zulaufen. Vorteilhafterweise ist die Cusp-Struktur gegen den Magnetfeldbereich mit zu dem Oberflächenbereich überwiegend parallelem Verlauf in Richtung eines Potentialgefälles für Elektronen zwischen einer Kathode und einer in der Ionisationskammer angeordneten Anode versetzt. Die Cusp-Struktur wirkt reflektierend auf Elektronen, welche sich entlang der Magnetfeldlinien auf die Kammerwand zu bewegen.

In an sich gebräuchlicher Art ist vorteilhafterweise eine Kathodenelektrode außerhalb der Plasmakammer seitlich gegen die Strahlaustrittsöffnung versetzt angeordnet. Eine gegenüber der Kathodenelektrode auf einer Hochspannung liegende Anodenanordnung ist am Fuß der Ionisationskammer angeordnet. Die Kathodeneleketrode emittiert Elektronen, welche als Primärelektronen für die Ionisation des Arbeitsgases und zur Neutralisation des ausgestoßenen Plasmastrahls dienen. Die Kathodenelektrode ist vorteilhafterweise radial bezüglich der Mittellängsachse der Ionisationskammer weiter außen liegend angeordnet als die Abschirmfläche bzw. zumindest ein Teil der Abschirmfläche liegt in radialer Richtung zwischen der Kathodenelektrode und der Strahlaustrittsöffnung. Die von der Kathodenelektrode unter der Einwirkung der Hochspannung in Richtung der Strahlaustrittsöffnung und des Plasmasstrahls bewegten Elektronen überqueren dabei einen Raumbereich zwischen der Abschirmfläche und dem ausgestoßenen Plasmastrahl. Vorteilhafterweise enthält die Ionenbeschleunigeranordnung eine Magnetanordnung zur Erzeugung eines Magnetfelds, welches in dem Raumbereich zwischen der Abschirmfläche und dem Plasmastrahl einen gekrümmten Magnetfeldlinienverlauf mit zur Abschirmfläche überwiegend paralleler Feldkomponente zeigt. Hierdurch werden vorteilhafterweise Elektronen weitgehend von einer Bewegung auf die Abschirmfläche zu abgehalten.

Die Abschirmfläche kann vorteilhafterweise in zumindest ihrem überwiegenden Flächenanteil trichterförmig von dem Raumflugkörper weg aufgeweitet ausgeführt sein. Die Abschirmfläche kann teilweise durch die Oberfläche einer Polschuhanordnung im Bereich der Strahlaustrittsöffnung gebildet sein.

Die Abschirmfläche besteht vorteilhafterweise aus einem gegen Erosion durch Ionensputtern widerstandsfesten Material, wie z. B. Keramik oder Graphit. Eine sputterfeste Abschirmfläche kann insbesondere auch durch eine Beschichtung aus sputterfestem Material auf einem Trägerkörper aus einem weniger sputterfesten Material gebildet sein.

Die Erfindung ist nachfolgend anhand bevorzugter Ausführungsbeispiele unter Bezugnahme auf die Abbildungen noch eingehend veranschaulicht.
- Fig. 1: eine allgemeine Vorrichtung zum Schutz eines Flächenabschnitts,
- Fig. 2: einen Ausschnitt aus einer Ionenbeschleunigeranordnung.

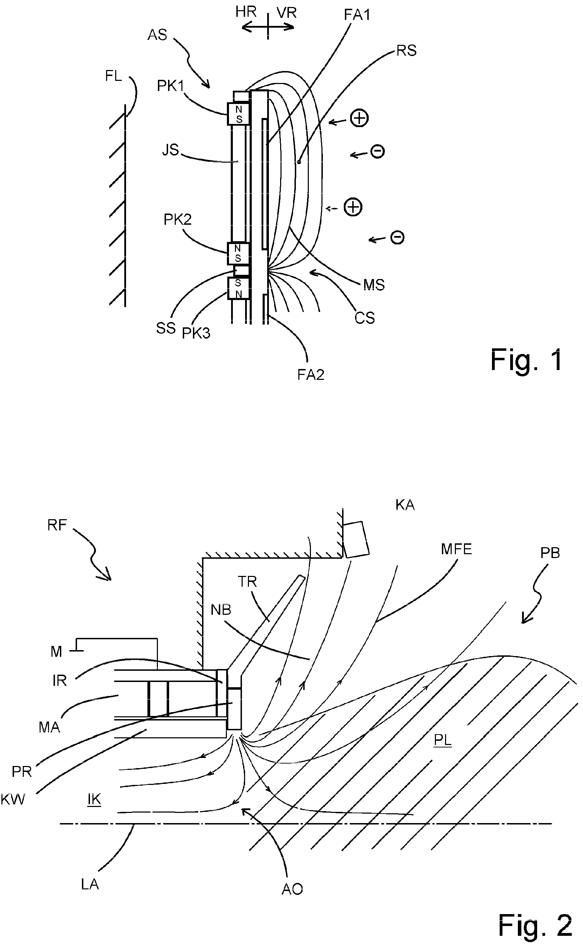

In Fig. 1 ist ein Flächenabschnitt FA1 angenommen, welcher insbesondere eine photovoltaisch aktive Fläche einer Solarzellenanordnung eines Raumflugkörpers sein kann. Positiv geladene Ionen aus dem umgebenden Weltraum sind in ihrer Bewegungsrichtung auch auf den Flächenabschnitt FA1 gerichtet, insbesondere durch ein Potentialgefälle für Ionen in Richtung einer hinter dem Flächenabschnitt liegenden leitenden Fläche FL auf Massepotential des Raumflugkörpers. Als vor dem Flächenabschnitt liegend sei der Halbraum VR auf einer gegen Ioneneinfall nicht abgedeckten Seite des Flächenabschnitts FA1 bezeichnet, als hinter dem Flächenabschnitt FA1 liegend der Halbraum HR auf der gegenüber liegenden Seite, von welcher aus der Flächenabschnitt durch ein Gehäuse, eine Trägeranordnung oder durch den Raumflugkörper selbst gegen lonenbeaufschlagung weitgehend abgeschattet ist.

Eine Magnetanordnung AS, welche vorzugsweise Permanentmagnetkörper PK enthält, ist bei dem Flächenabschnitt FA1 angeordnet und erzeugt in dem Raumbereich RS in Richtung der Flächennormalen des Flächenabschnitts FA vor dem Flächenabschnitt ein Magnetfeld MS mit überwiegend zu dem Flächenabschnitt paralleler Feldrichtung, d. h., dass die Feldlinien gegen die Flächennormale um mehr als 45° und gegen die flächenparallele Richtung um weniger als 45° geneigt sind. Die Magnetanordnung enthält im skizzierten Beispiel hinter dem Flächenabschnitt Permanentmagnetkörper PK1, PK2, welche mit gleicher Polausrichtung parallel zur Ebene des Flächenabschnitts beabstandet und durch ein weichmagnetisches Joch verbunden sind. Eine zu PK1, PK2, JS gleichartige weitere Teil-Magnetanordnung hinter einem benachbarten Flächenabschnitt FA2 ist durch einen Permanentmagnetkörper PK3 angedeutet, wobei die Polausrichtung der weiteren Teil-Magnetanordnung zu der der ersten Teil-Magnetanordnung PK1, PK2, JS entgegen gesetzt ist, so dass sich bei den Permanentmagnetkörpern PK2, PK3 gleiche Magnetpole S gegenüberstehen. Zwischen die Permanentmagnetkörper PK2, PK3 ist ein weichmagnetischer Polschuh SS eingefügt. Bei dem Polschuh SS weist das Magnetfeld in dem vorderen Halbraum VR eine Cusp-Struktur mit einem besonders starken Feldgradienten auf. Ein weiterer Polschuh SE kann bei dem Permanentmagnetkörper PK1 angeordnet sein.

Wenn ausgehend von einer elektrisch neutralen Oberfläche des Flächenabschnitts FA1 Ionen und Elektronen in ihrer Bewegungsrichtung auf den Flächenabschnitt FA1 zu gerichtet sind, werden die positiv geladenen Ionen durch das Magnetfeld kaum beeinflusst und treffen auf die Oberfläche des Flächenabschnitts FA1 auf und laden diese positiv auf, so dass schnell ein für weitere Ionen abstoßend wirkendes elektrisches Feld aufgebaut wird. Elektronen, welch ein Richtung des Flächenabschnitts FA1 aus dem Halbraum VR ankommen und/oder durch die positiv aufgeladene Oberfläche in Richtung des Flächenabschnitts FA1 beschleunigt werden, werden aufgrund ihrer geringen Masse von dem Magnetfeld auf eine kreisförmige oder wendelförmige Bahnen um Magnetfeldlinien gezwungen und können entlang dieser zu dem Permanentmagnetkörper PK1 oder zu der Cusp-Struktur bei dem Polschuh SS driften, wo sie wegen des starken Feldgradienten überwiegend reflektiert werden. Durch die Sperrwirkung des Magnetfelds für Elektronen bleibt das abstoßende Feld auf der vorzugsweise elektrisch nicht leitenden oder zumindest von anderen leitenden Teilen, wie der Fläche FL hochohmig getrennten Oberfläche des Flächenabschnitts FA1 erhalten.

Als Raumbereich RS vor dem Flächenabschnitt FA1 sei insbesondere ein Bereich vor dem Flächenabschnitt betrachtet, dessen Erstreckung in Richtung der Flächennormalen geringer ist als der Abstand der nach außen wirkenden Pole bzw. Polschuhe der Magnetanordnung, z. B. der Polschuh SE und SS.

Fig. 2 zeigt als Schnittdarstellung mit einer die Strahlachse eines Plasmastrahls enthaltenden Schnittebene einen schematischen Ausschnitt aus einer Ionenbeschleunigeranordnung in einem Raumflugkörper RF.

Eine Ionisationskammer IK mit einer Mittellängsachse LA besitzt vorteilhafterweise einen um die Mittellängsachse kreisrunden Querschnitt und ist quer zur Mittellängsachse durch eine vorzugsweise dielektrische Kammerwand KW begrenzt. Auf der der Ionisationskammer radial abgewandten Seite der Kammerwand ist eine Magnetanordnung MA angeordnet, welche die Ionisationskammer umgibt und in dieser ein Magnetfeld erzeugt. Die Ionisationskammer ist in Längsrichtung LR einseitig mit einer Strahlaustrittsöffnung AO offen, durch welche unter dem Einfluss eines elektrostatischen Feldes durch Ionisation eines Arbeitsgases in der Ionisationskammer erzeugte positiv geladene Ionen als Plasmastrahl PB in Längsrichtung ausgestoßen werden.

Teil der Magnetanordnung und/oder andere Teile der Ionenbeschleunigeranordnung oder leitende Teile des Raumflugkörpers liegen auf einem Massepotential M des Raumflugkörpers. Eine außerhalb der Ionisationskammer seitlich gegen die Strahlaustrittsöffnung AO versetzt angeordnete Kathodenanordnung KA liegt typischerweise gleichfalls auf Massepotential. Eine der Strahlaustrittsöffnung entgegen gesetzt am Fuß der Ionisationskammer angeordnete, in der Fig. 1 nicht dargestellte Anodenanordnung liegt auf einer Hochspannung in der Größenordnung von 1 kV gegen das Massepotential.

In dem in Bewegungsrichtung des Plasmastrahls nach der Strahlaustrittsöffnung liegenden Bereich des Plasmastrahls, welcher als Plume-Bereich bezeichnet wird, liegt ein Plume-Potential vor, welches für die positiv geladenen Ionen typischerweise zwischen 20 V und 100 V höher liegt als das Massepotential, so dass sich von dem Plume-Bereich für die Ionen ein Potentialgefälle in Richtung der auf Massepotential liegenden Teile ergibt und Ionen in Richtung des Massepotential beschleunigt werden. Die Erstreckung des Plume-Bereich in Strahlrichtung nach der Strahlaustrittsöffnung liegt typischerweise zwischen 10 cm und 40 cm.

In dem skizzierten Beispiel ist ein Polschuh PR bei der Strahlaustrittsöffnung vorgesehen, welcher diese ringförmig umgibt. Der ringförmige Polschuh besteht typischerweise aus Eisen. Der Polschuh ist durch einen isolierenden Körper IR gegen die auf Massepotential liegenden Teile der Magnetanordnung und/oder andere auf Massepotential liegende Teile isoliert. Ein trichterförmiger Körper TR, welcher sich in Längsrichtung LR bzw. Strahlrichtung des Plasmastrahls hin aufweitet, schließt sich an den ringförmigen Polschuhkörper PR an. Der trichterförmige Körper kann aus Metall, welches nicht weichmagnetisch ist und das Magnetfeld nicht beeinflusst, oder aus einem Dielektrikum bestehen.

Die Kathodenanordnung liegt in radialer Richtung außerhalb des Oberflächenbereichs des trichterförmigen Körpers TR und ist vorteilhafterweise in Längsrichtung LR gegen den trichterförmigen Körper versetzt angeordnet.

Wenn beim Einschalten der Ionenbeschleunigeranordnung angenommen sei, dass sich der Polschuhkörper PR und der trichterförmige Körper TR auf oder nahe dem Massepotential befinden, werden Ionen aus dem Plume-Bereich PL in Richtung der auf Massepotential liegenden Teile beschleunigt und treffen auf die dem Plume-Bereich zuweisenden Oberflächen von Polschuhkörper PR und trichterförmigen Körper TR und laden diese Körper oder bei Ausführung des trichterförmigen Körpers als dielektrischem Körper dessen dem Plume-Bereich zuweisende Oberfläche elektrostatisch auf. Dabei werden diese Körper bzw. deren Oberfläche auf ein für Ionen über dem Massepotential liegendes Zwischenpotential angehoben. Das Potentialgefälle für Ionen aus dem Plume-Bereich, welche nur noch dieses Zwischenpotential sehen, wird dadurch wesentlich verringert und es stellt sich schnell ein Gleichgewichtszustand ohne oder mit nur geringem lonenstrom aus dem Plume-Bereich in Richtung der Körper PR, TR ein.

Ein verbleibender Reststrom von Ionen aus dem Plume-Bereich zu den Körpern PR, TR kann sich insbesondere dadurch ergeben, dass auch Elektronen auf die Körper PR, TR auftreffen, insbesondere Elektronen, welche aus einer seitlich gegen die Austrittsöffnung versetzten Kathodenanordnung KA emittiert werden. Die Kathodenanordnung liefert Primärelektronen für die Ionisation des Arbeitsgases in der Ionisationskammer und dient als Neutralisator für den ausgestoßenen Plasmastrahl PB.

Um einen Strom von Elektronen auf die Körper PR, TR gering zu halten, ist vorgesehen, dass ein von der Magnetanordnung erzeugtes Magnetfeld MFE außerhalb der Ionisationskammer in einen Raumbereich zwischen dem Plume-Bereich und den Körpern PR, TR, insbesondere einem den Oberflächen der Körper nahen Bereich NB einen überwiegend parallel zu den Oberflächen gerichteten Verlauf der Magnetfeldlinien zeigt. Unter überwiegend parallelen Verlauf sei dabei verstanden, dass für die überwiegenden (> 50 %) Flächenbereiche der Oberflächen der Körper PR, TR in dem Bereich NB in Richtung der Flächennormalen über diesen Flächenbereichen die Richtung der gekrümmten Magnetfeldlinien eher parallel zu der Oberfläche als senkrecht zu dieser verläuft. Elektronen werden dann entlang der Magnetfeldlinien überwiegend parallel zu der Oberfläche von dieser beabstandet geführt, ohne auf die Oberfläche aufzutreffen. Ionen bleiben von dem Magnetfeld aufgrund ihrer großen Masse und geringen Geschwindigkeit im wesentlichen unbeeinflusst.

Das Magnetfeld geht von dem Bereich NB mit zum Oberflächenbereich des Trägerkörpers TR überwiegend parallelem Verlauf über in eine Cusp-Struktur CS bei der Strahlaustrittsöffnung der Ionisationskammer, in welcher die Feldrichtung des Magnetfelds überwiegend radial verläuft und ein hoher radialer Feldgradient vorliegt. Die radiale Feldkomponente bei der Cusp-Struktur ist der radialen Feldkomponente im Bereich NB entgegen gesetzt, so dass die Feldlinien zwischen dem Bereich NB und der Cusp-Struktur eine radiale Richtungsumkehr durchlaufen. Von der Kathodenanordnung emittierte Elektronen werden in dem Bereich NB durch das Magnetfeld von der Oberfläche des trichterförmigen Körpers abgehalten und in Richtung des Plume-Bereichs PL bzw. der Ionisationskammer und dort insbesondere der Cusp-Struktur geleitet, wo sie wegen der Wirkung der Cusp-Struktur mit langer Verweilzeit gehalten werden. Die Wirkung der Cusp-Struktur bei einer derartigen lonenbeschleunigeranordnung ist an sich aus dem eingangs genannten Stand der Technik bekannt.

Der trichterförmige Körper TR besteht vorteilhafterweise aus einem nicht magnetisierbaren Metall mit guter Wärmeleitfähigkeit und ist gut wärmeleitend mit dem Polschuhkörper verbunden, wodurch vorteilhafterweise an dem Polschuh anfallende Verlustwärme schnell abgeleitet und über die wesentlich größere Fläche des trichterförmigen Körpers in den umgebenden Weltraum abgestrahlt werden kann.

Polschuhkörper PR und/oder trichterförmiger Körper TR können vorteilhafterweise mit einer Beschichtung wie insbesondere Graphit oder Keramik versehen sein, welche gegenüber den Materialien dieser Körper eine höhere Sputterfestigkeit aufweisende

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Ionenbeschleunigeranordnung mit einer Vorrichtung zur Verminderung der Beaufschlagung eines Flächenabschnitts (FA) mit positiv geladenen Ionen, mit einer Ionisationskammer (IK) und einer Einrichtung zur Ionisation eines in die Ionisationskammer eingeleiteten Arbeitsgases sowie eine Elektrodenanordnung zur elektrostatischen Beschleunigung der erzeugten Ionen mittels einer statischen Hochspannung und deren Ausstoß als Plasmastrahl (PB) aus einer Strahlaustrittsöffnung (AO) der Ionisationskammer (IK) geeignet als in einem Raumflugkörper (RF) an dessen Außenseite angeordneter Antriebseinrichtung mit vom Raumflugkörper (RF) weg gerichteter Strahlrichtung, wobei eine seitlich gegen die Austrittsöffnung (AO) versetzte, insbesondere diese umgebende und dem ausgestoßenen Plasmastrahl (PB) zuweisende Abschirmfläche im Betrieb der Ionenbeschleunigeranordnung räumlich zwischen dem ausgestoßenen Plasmastrahl (PB) und auf Massepotential liegenden Teilen, insbesondere auf Massepotential liegenden Außenflächen des Raumflugkörpers (RF) und elektrisch auf einem von dem Massepotential des Raumflugkörpers (RF) getrennten Potential liegt, **dadurch gekennzeichnet, dass** eine Magnetanordnung (MA) ein Magnetfeld (MS) erzeugt, welches in einem Raumbereich (NB) zwischen der Abschirmfläche und dem Plasmastrahl (PB) einen gekrümmten Magnetfeldlinienverlauf mit zur Abschirmfläche überwiegend paralleler Feldkomponente aufweist.

2. Anordnung nach Anspruch 1, **dadurch gekennzeichnet, dass** die Abschirmfläche wenigstens teilweise elektrisch nichtleitend ist.

3. Anordnung nach Anspruch 1 oder 2, **dadurch gekennzeichnet, dass** die Abschirmfläche elektrisch gegen das Massepotential (M) der Ionenbeschleunigeranordnung isoliert ist.

4. Anordnung nach einem der Ansprüche 1 bis 3, **dadurch gekennzeichnet, dass** die Abschirmfläche im Antriebsbetrieb der Antriebsanordnung auf gleitendem Potential liegt.

5. Anordnung nach einem der Ansprüche 1 bis 4, **dadurch gekennzeichnet, dass** die Abschirmfläche im Antriebsbetrieb der Antriebsanordnung um eine definierte Spannung gegen das Massepotential der Ionenbeschleunigeranordnung versetzt ist.

6. Anordnung nach einem der Ansprüche 1 bis 5, **dadurch gekennzeichnet, dass** eine Kathodenelektrode (KA) außerhalb der Ionisationskammer (IK) seitlich gegen die Austrittsöffnung versetzt angeordnet ist.

7. Anordnung nach Anspruch 6, **dadurch gekennzeichnet, dass** die Abschirmfläche in radialer Richtung zwischen der Kathodenelektrode (KA) und der Strahlaustrittsöffnung (AO) verläuft.

8. Anordnung nach einem der Ansprüche 1 bis 7, **dadurch gekennzeichnet, dass** das von der Magnetanordnung (MA) erzeugte Feld zwischen einer Mittellängsachse (LA) der Ionisationskammer (IK) und dem Rand der Strahlaustrittsöffnung (AO) mit überwiegend radialem Magnetfeldverlauf eine Cusp-Struktur bildet.

9. Anordnung nach einem der Ansprüche 1 bis 8, **dadurch gekennzeichnet, dass** die Abschirmfläche zumindest überwiegend trichterförmig aufgeweitet verläuft.

10. Anordnung nach einem der Ansprüche 1 bis 9, **dadurch gekennzeichnet, dass** die Abschirmfläche durch eine Beschichtung auf einem Trägerkörper (TR) gebildet ist, welche eine höhere Sputterfestigkeit besitzt als der Trägerkörper selbst.

## Claims

1. Ion accelerator arrangement having an apparatus for reducing the impact of positively charged ions on a surface section (FA), having an ionization chamber (IK) and a device for ionizing a working gas that is introduced into the ionization chamber and also an electrode arrangement for electrostatically accelerating the ions produced by way of a static high-voltage and the emission thereof in the form of a plasma beam (PB) from a beam exit opening (AO) of the ionization chamber (IK) suitable as a propulsion device, arranged in a spacecraft (RF) on the outside thereof, with a beam direction which is directed away from the spacecraft (RF), wherein a shielding surface, which is laterally offset with respect to the exit opening (AO), in particular surrounds it and faces the emitted plasma beam (PB), during operation of the ion accelerator arrangement is spatially between the emitted plasma beam (PB) and parts that are at earth potential, in particular external surfaces of the spacecraft (RF) that are at earth potential, and is electrically at a potential that is separate from the earth potential of the spacecraft (RF), **characterized in that** a magnet arrangement (MA) produces a magnetic field (MS) which has in a spatial region (NB) between the shielding surface and the plasma beam (PB) a curved magnetic field line orientation with a field component that is substantially parallel with respect to the shielding surface.

2. Arrangement according to Claim 1, **characterized in that** the shielding surface is at least partially electrically non-conducting.

3. Arrangement according to Claim 1 or 2, **characterized in that** the shielding surface is electrically insulated with respect to the earth potential (M) of the ion accelerator arrangement.

4. Arrangement according to one of Claims 1 to 3, **characterized in that** the shielding surface is at a floating potential during propulsion operation of the propulsion arrangement.

5. Arrangement according to one of Claims 1 to 4, **characterized in that**, during the propulsion operation of the propulsion arrangement, the shielding surface is offset by a defined voltage with respect to the earth potential of the ion accelerator arrangement

6. Arrangement according to one of Claims 1 to 5, **characterized in that** a cathode electrode (KA) is arranged such that it is laterally offset with respect to the exit opening outside the ionization chamber (IK) .

7. Arrangement according to Claim 6, **characterized in that** the shielding surface extends in the radial direction between the cathode electrode (KA) and the beam exit opening (AO).

8. Arrangement according to one of Claims 1 to 7, **characterized in that** the field produced by the magnet arrangement (MA) between a central longitudinal axis (LA) of the ionization chamber (IK) and the edge of the beam exit opening (AO) forms a cusp structure with substantially radial magnetic field orientation.

9. Arrangement according to one of Claims 1 to 8, **characterized in that** the shielding surface extends such that it expands at least substantially in the shape of a funnel.

10. Arrangement according to one of Claims 1 to 9, **characterized in that** the shielding surface is formed by a coating on a carrier body (TR), said coating having a higher sputter resistance than the carrier body itself.

## Revendications

1. Arrangement accélérateur d'ions comprenant un dispositif destiné à réduire la sollicitation d'une portion de surface (FA) avec des ions chargés positivement, comprenant une chambre d'ionisation (IK) et un appareil destiné à ioniser un gaz de travail envoyé dans la chambre d'ionisation ainsi qu'un arrangement d'électrodes destiné à l'accélération électrostatique des ions générés au moyen d'une haute tension statique et à leur éjection sous la forme d'un jet de plasma (PB) hors d'une ouverture de sortie de jet (AO) de la chambre d'ionisation (IK), adapté en tant qu'appareil de propulsion dans un engin spatial (RF) disposé sur son côté extérieur avec un sens du jet orienté à l'opposé de l'engin spatial (RF), une surface de blindage, décalée latéralement par rapport à l'ouverture de sortie (AO), notamment entourant celle-ci et faisant face au jet de plasma (PB) éjecté, étant disposée spatialement, pendant le fonctionnement de l'arrangement accélérateur d'ions, entre le jet de plasma (PB) éjecté et des pièces qui se trouvent au potentiel de la masse, notamment des surfaces extérieures de l'engin spatial (RF) qui se trouvent au potentiel de la masse et se trouvant électriquement à un potentiel séparé du potentiel de masse de l'engin spatial (RF), **caractérisé en ce qu'**un arrangement d'aimants (MA) génère un champ magnétique (MS) qui présente, dans une zone de l'espace (NB) entre la surface de blindage et le jet de plasma (PB), un tracé de lignes de champ magnétique courbe avec des composantes de champ majoritairement parallèles à la surface de blindage.

2. Arrangement selon la revendication 1, **caractérisé en ce que** la surface de blindage est au moins partiellement non conductrice d'électricité.

3. Arrangement selon la revendication 1 ou 2, **caractérisé en ce que** la surface de blindage est isolée électriquement du potentiel de masse (M) de l'arrangement accélérateur d'ions.

4. Arrangement selon l'une des revendications 1 à 3, **caractérisé en ce que** la surface de blindage, en régime de propulsion de l'arrangement de propulsion, se trouve à un potentiel glissant.

5. Arrangement selon l'une des revendications 1 à 4, **caractérisé en ce que** la surface de blindage, en régime de propulsion de l'arrangement de propulsion, est décalée d'une tension définie par rapport au potentiel de masse de l'arrangement accélérateur d'ions.

6. Arrangement selon l'une des revendications 1 à 5, **caractérisé en ce qu'**une électrode de cathode (KA) est disposée en-dehors de la chambre d'ionisation (IK) décalée latéralement par rapport à l'ouverture de sortie.

7. Arrangement selon la revendication 6, **caractérisé en ce que** la surface de blindage s'étend dans la direction radiale entre l'électrode de cathode (KA) et l'ouverture de sortie du jet (AO).

8. Arrangement selon l'une des revendications 1 à 7, **caractérisé en ce que** le champ généré par l'arrangement d'aimants (MA) forme une structure de cuspide entre un axe longitudinal central (LA) de la chambre d'ionisation (IK) et le bord de l'ouverture de sortie du jet (AO) avec un tracé de champ magnétique principalement radial.

9. Arrangement selon l'une des revendications 1 à 8, **caractérisé en ce que** la surface de blindage s'étend au moins principalement en s'élargissant en forme d'entonnoir.

10. Arrangement selon l'une des revendications 1 à 9, **caractérisé en ce que** la surface de blindage est formée par un revêtement sur un corps porteur (TR), lequel possède une résistance au bombardement ionique supérieure à celle du corps porteur.
